# EUROPEAN PATENT APPLICATION

(11) **EP 2 881 081 A1**
(43) Date of publication of application: **10.06.2015**
(21) Application number: 13195584.1
(22) Date of filing: 04.12.2013
(51) Int. Cl.: A61C 17/34

(54) **Electric toothbrush and tool head for such toothbrush**

(71) Applicant: Braun GmbH, 61476 Kronberg (DE)
(72) Inventor: Kreßner, Gerhard, 63674 Altenstadt (DE)
(74) Representative: Töpert, Verena Clarita

(57) **Abstract**

A tool head for an electric toothbrush has at least one tool carrier movably supported on a base part by means of a bearing device. The bearing device includes rotational support means for rotatably supporting the tool carrier about an axis of movement and axial support means for axially movably supporting the tool carrier along the axis of movement, and drive means for driving the tool carrier in an oscillating manner to rotationally oscillate about said axis of movement and to axially oscillate along said axis of movement. The drive means include a cam surface for transforming a rotation of said tool carrier into axial movement of the tool carrier relative to the base part along the axis of movement.

## Description

### FIELD OF THE INVENTION

The present disclosure is concerned with a tool head for an electric toothbrush comprising at least one tool carrier movably supported on a base part by means of a bearing device. Further, the present disclosure is directed to an electric toothbrush comprising such tool head which is rotatably and axially movably about/along an axis of movement.

### BACKGROUND OF THE INVENTION

For some applications of toothbrushes, it can be desirable to have three-dimensional movements of the brush head. It may be desirable to have the tool carrier which may carry a conventional bristle field and/or a thorn-like interdental cleaner and/or sponge-like massaging elements and/or other cleaning or treating tools used on the brush head of toothbrushes, to move in a rotatory manner about an axis of rotation and to reciprocate in an axial manner along a reciprocating axis which may be coaxial to the aforementioned axis of rotation. Such additional poking movement along an axis substantially parallel to the longitudinal axis of the bristle tufts and/or the thorn-like interdental cleaner and thus substantially perpendicular to the longitudinal axis of the toothbrush may help in cleaning interdental spaces and periodontal pockets to remove plaque buildup there.

However, in order to achieve multiaxial movement of the tool carrier at the toothbrush head, often relatively complicated drive trains and transmissions are necessary. When using an electric motor which is positioned in the handpiece of a toothbrush and provides for only one-dimensional rotational movement, a transmitter or drive train is necessary to bridge the distance between the motor in the handpiece and the tool carrier at the toothbrush head, wherein a respective transmission is necessary so as to transform the one-dimensional rotational movement into the desired three-dimensional movement of the tool carrier. In this regard, it has already been suggested to use a transmission rod extending through the tubular toothbrush portion connecting the brush head with the handpiece, wherein such transmission rod is driven to carry out a three-dimensional rotational movement defining a double conical movement path. On the other hand, one may use a rotatory transmission shaft having a cranked shaft end carrying out three-dimensional movement due to its cranked shape. However, such transmission structures carrying out three-dimensional movements require shaft bearing structures taking up multiaxial forces and moments, thus rendering the bearing structure relatively complicated.

It is an object of the present disclosure to provide a tool head for three-dimensional movements of the tool carrier including rotational and poking movements without necessitating complicated bearing structures and transmission structures in the handpiece of the toothbrush. It is another objective of the present disclosure to achieve three-dimensional movement of the tool carrier with a simple bearing and transmission structure allowing for easy exchange of the tool carrier and/or exchange of the tool head.

### SUMMARY OF THE INVENTION

In accordance with one aspect, a tool head for an electric toothbrush is provided that comprises at least one tool carrier movably supported on a base part by means of a bearing device. The bearing device includes rotational support means for rotatably supporting said tool carrier about an axis of movement and axial support means for axially movably supporting said tool carrier along said axis of movement, and drive means for driving said tool carrier in an oscillating manner to rotationally oscillate about said axis of movement and to axially oscillate along said axis of movement. The drive means include a cam surface for transforming a rotation of said tool carrier into axial movement of said tool carrier relative to said base part along said axis of movement.

In accordance with one aspect, a toothbrush is provided that comprises such tool head and a handpiece connected to said tool head through a tubular connecting piece.

### BRIEF DESCRIPTION OF THE DRAWINGS

The invention is described in more detail below with reference an embodiment and figures, wherein:
Fig. 1 shows a perspective view of an example embodiment of a toothbrush comprising an example embodiment of a tool head;
Fig. 2 shows a cross-sectional view of the tool head of Fig. 1; and
Fig. 3 shows a schematic top view onto a tool carrier of the toothbrush of Fig. 1.

### DETAILED DESCRIPTION OF THE INVENTION

According to the present disclosure, a bearing device supporting a tool carrier at a base part of a tool head provides for a drive transmission structure transforming rotational movement of the tool carrier into reciprocating movement, thus creating rotational and reciprocating movement of the tool carrier and allowing for using drive means adapted to provide for rotational driving forces. The drive means for driving the tool carrier rotatably about and axially along an axis of movement may include a cam surface for transforming a rotation of the tool carrier into axial movement of said tool carrier along said axis of movement, thus creating multiaxial movement of said tool carrier substantially without necessitating three-dimensional movement of the drive means connecting the tool carrier to an electric motor.

In some embodiments, the drive means may include a drive shaft element connectable to said tool carrier at a connection joint spaced apart from the axis of movement of the tool carrier. The drive element may be adapted to one-dimensionally reciprocate along a longitudinal axis substantially parallel to the longitudinal axis of the toothbrush and substantially transverse to said axis of movement of the tool carrier. Optionally, the base part of the tool head and/or the tool carrier may be provided with a sloped surface extending along an arc around said axis of movement and may be adapted to cause the tool carrier to reciprocate along said axis of movement about which the tool carrier also rotationally oscillates.

In some embodiments, the drive shaft element may comprise a bent and/or cranked connecting portion extending from a shaft portion which is coaxial to the longitudinal axis, to a joint end portion which is connectable to said connecting joint and offset laterally to said longitudinal axis.

Optionally, the connecting joint may be associated with a portion of the tool carrier which may, when said tool carrier is in a middle position of its rotational oscillation, positioned in a plane substantially perpendicular to the longitudinal axis and/or within a sector of about +/-15° relative to an axis perpendicular to said longitudinal axis.

In some embodiments, the bearing device including the cam surface may be arranged radially inwards of the connecting joint where the tool carrier may be connected to the drive shaft element.

To allow for a three-dimensional or multiaxial movement of the tool carrier substantially without complicated transmission and bearing structures in the handpiece, the present disclosure suggests to adapt the bearing device supporting the tool carrier such that a one-dimensional movement of the tool carrier may be transformed into a multiaxial movement thereof. A rotational movement of the tool carrier may create automatically an additional movement along the axis of rotation, thus providing for a multiaxial movement which may include rotation of the tool carrier and an axial, poking movement along the axis of rotation. The drive means for driving the tool carrier include at least one cam surface for transforming a rotation of the tool carrier about the axis of movement thereof into axial movement of said tool carrier along said axis of movement. Using such cam surface for the generation of an additional axial movement of the tool carrier along the axis of rotation/movement allows for use of a simple transmitter structure that may connect the tool carrier to the motor in the handpiece of the toothbrush. It may be sufficient when such transmitter structure carries out a one-dimensional driving movement that effects rotation of the tool carrier, since the additional poking movement along the axis of rotation is then created at the tool head by means of the aforementioned cam surface.

To allow for a simple bearing structure for the transmitter bridging the distance between the motor in the handpiece and the tool carrier at the tool head of the toothbrush, a transmitter rod or driving rod may be used which may be adapted to carry out axial movement along its longitudinal axis which substantially may be parallel to and/or coaxial to the longitudinal axis of the toothbrush or the longitudinal axis of a tubular connecting piece that connects the handpiece of the toothbrush to the tool head. Using such axially reciprocating drive rod may also allow for a slim design of the tubular connecting piece and the tool head, since in the absence of pivoting movements or rotational movements with a conical path of movement of the driving rod, the space necessary to allow the driving movement of the driving rod may be small. Additionally, a simple and thus slim and small bearing structure for the driving rod may be sufficient, since no multiaxial reaction forces and moments need to be taken up.

In some embodiments, to provide for a simple tool carrier structure, but still efficient cleaning and care of the teeth, the tool carrier may have a one-piece, substantially rigid structure so that basically the entire tool carrier may execute substantially the same movements, e.g. rotational oscillation and axial reciprocation about/along the axis of movement. Such tool carrier may have a substantially plate-like configuration and/or a substantially planar supporting surface or plate-like support element, wherein the aforementioned axis of movement may extend substantially perpendicular to the plane defined by the support plate element. Different cleaning or caring tools may be arranged on the tool carrier, wherein a bristle field which may comprise a plurality of bristle tufts may be carried by the tool carrier. Additionally or in the alternative, other tools such as a thorn-like interdental cleaner, spongy massaging elements made of rubber, thermoplastic or other yieldable materials or combinations of such tools may be provided on the tool carrier.

The aforementioned cam surface basically may have different configurations, wherein, in accordance with some embodiments, said cam surface may include a sloped support surface extending along an arc around the axis of movement and being sloped relative to a plane extending perpendicular to the axis of movement.

In some embodiments, said sloped support surface may form a screw-type support surface winding around said axis of movement which may form the center of said support surface.

In some embodiments, such sloped, screw-type support surface may be integrated into a central bearing block that supports the tool carrier relative to the base part of the tool head, wherein the cam surface may be formed by the top surface of such central bearing block facing the back side of the tool carrier and surrounding the axis of movement. Thus, two functions may be integrated into one tool head element. The central bearing block of the base part provides for, on the one hand, support of the tool carrier and taking up the reaction forces due to pressing the tool carrier and the tools thereon against the teeth, and, on the other hand, creating axial reciprocating movement when the tool carrier is rotated.

To reduce surface pressure and/or smoothly distribute the actuation forces and/or stabilizing the tool carrier against tilting movements, both the tool carrier and the base part may be provided with such cam surface, wherein the tool carrier's cam surface may be substantially corresponding in shape to the base part's cam surface, wherein said cam surfaces may be in sliding engagement with each other. In some embodiments, both the top surface of the aforementioned bearing block and the back side of the tool carrier may be provided with a cam surface of the aforementioned type, for example, a screw-type, sloped surface extending around the axis of movement, wherein the tool carrier's cam surface may be substantially corresponding in shape to the base part's cam surface. By means of such pair of cam surfaces corresponding to each other, a relatively large surface area of engagement may be achieved, wherein such surface of engagement may extend in different sectors at different sides of the axis of movement, thus taking up tilting moments when the tool carrier is pressed against the bearing block during operation.

In order to precisely support the tool carrier to rotate about the axis of movement and to axially slide along such axis of movement, a pivot pin may be provided to connect the tool carrier to the central bearing block, wherein such pivot pin may extend substantially coaxially to the axis of movement and/or through the center of the bearing block and/or the center of the tool carrier. Such pivot pin may be slidably received in a support recess formed in the said bearing block and/or said tool carrier, wherein the said support recess may have a rotationally symmetrical configuration so as to allow for rotational movements of the tool carrier relative to the base part in addition to the axial movement allowed by slidable insertion of the pivot pin in said support recess.

The cam surface surrounding the pivot pin may have different configurations. In order to substantially support the tool carrier against tilting, the cam surface may extend over substantially 360°, thus forming a substantially ring-shaped or circular support surface upon which the back side of the tool carrier is lying. However, in an alternative the cam surface may extend over less than 360°, wherein such partially circular or ring-shaped configuration may help, e.g., in connecting the drive means to the tool carrier which may have an arm radially extending to one side. In addition or in the alternative, the cam surface may comprise a plurality of cam surface sections supplementing each other, e.g. in terms of a pair of cam surfaces extending along an arc of about 180° or three cam surface sections each extending over about 120°.

With regard to the surface shape, the cam surface may have different configurations. For example, so as to effect centering of the tool carrier towards the axis of movement when the tool carrier is rotated, the cam surface may have a substantially concave configuration with the axis of movement forming the center of concavity. In some embodiments, the cam surface, when viewed in a cross-sectional plane containing the axis of movement, may be sloped towards said axis of rotation so that the cam surface portion neighboring the axis of movement may form a peak or a depression of the cam surface. In an alternative, if no such centering effect is desired, the cam surface may have a surface configuration extending substantially at a right angle relative to the axis of movement when viewing the cam surface in a cross-sectional plane containing the axis of movement.

By means of varying the slope of the cam surface in circumferential direction, the axial, poking movement can be controlled in different ways. The functional relationship of the axial movement to the rotation of the tool carrier can be controlled by means of varying the slope of the cam surface. In some embodiments, the sloped support surface may have a constant pitch and/or may be substantially planar when viewed in a cross-sectional plane containing the axis of movement.

In some embodiments, the cam surface may have a basically constant pitch, thereby creating a linear and/or proportional relationship between axial movement and rotational movement causing the tool carrier to axially move by a certain amount when rotating the tool carrier over a predetermined angle. On the other hand, when providing for a non-constant, e.g. parabolic slope of the cam surface in circumferential direction, rotation of the tool carrier about a certain angular amount may cause different amounts of axial movement, wherein, e.g. a parabolic slope may cause smaller axial movements for rotation in a middle sector of the rotational movement and larger axial movements when the rotational oscillation approaches their end or changing points.

The following is a non-limiting discussion of an example embodiment of a toothbrush and parts thereof in accordance with the present disclosure, where reference to the figures is made.

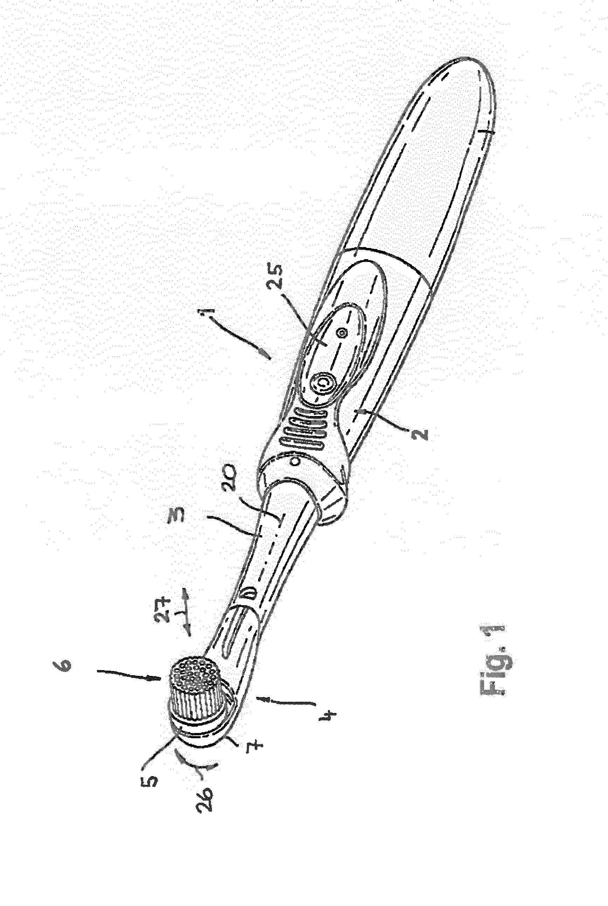

The toothbrush 1, as shown in Fig. 1, may include a handpiece 2 forming an elongate handle and accommodating power supply equipment such as a battery or a loadable accumulator, an electric motor and a control unit so as to control operation of the toothbrush. An input means 25 including, e.g., an on/off-switch may be provided on the handpiece 2 to control operation of the toothbrush 1.

The handpiece 2 is connected to a tool head 4 by means of a tubular connecting piece 3 which may be releasably fixed to the handpiece 2 and/or to the tool head 4.

The tool head 4 may comprise a substantially plate-shaped, circular contoured tool carrier 5 which supports a bristle field 6 comprising a plurality of bristle tufts. The main direction of such bristle field 6 may be substantially perpendicular to a plane defined by the tool carrier 5, wherein such main direction may, e.g., extend substantially perpendicular to the longitudinal axis 20 of the toothbrush 1 and/or of the tubular connecting piece 3.

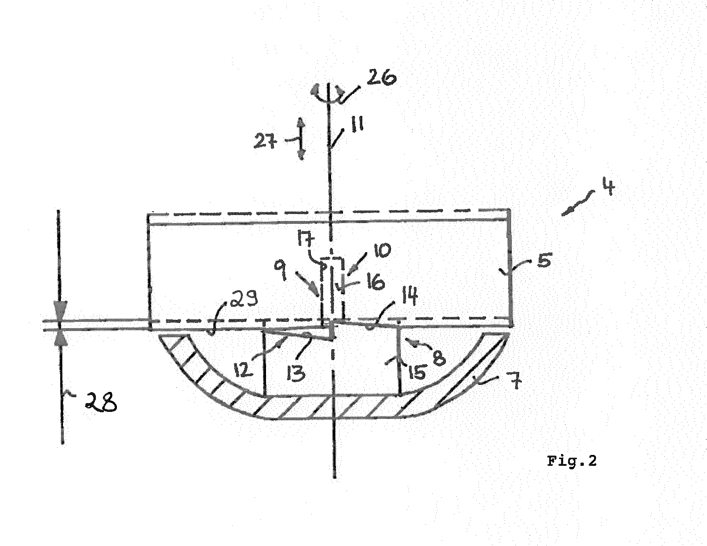

As indicated by arrows 26 and 27, the tool carrier 5 can be driven to rotate about and to move axially along an axis of movement 11 (cf. Fig. 2) in an oscillating manner, wherein such axis of movement 11 may extend substantially parallel to the aforementioned main direction of the bristle field 6 and/or substantially perpendicular to the plane defined by the tool carrier 5 and/or substantially perpendicular to the longitudinal axis 20.

To allow such multiaxial movement, the tool carrier 5 as shown in Fig. 2 may be supported on a base part 7 of the tool head 4 by means of a bearing device 8 which includes rotational support means 9 and axial support means 10 which together hold the tool carrier 5 in a defined orientation such that the plane defined by the tool carrier 5 may be in a fixed angular orientation relative to the base part 7 such that the tool carrier 5 substantially does not tilt relative to the base part 7. The base part 7 may be an integral part of the tubular connecting piece 3 or may be formed separately therefrom to be attached in a releasable manner.

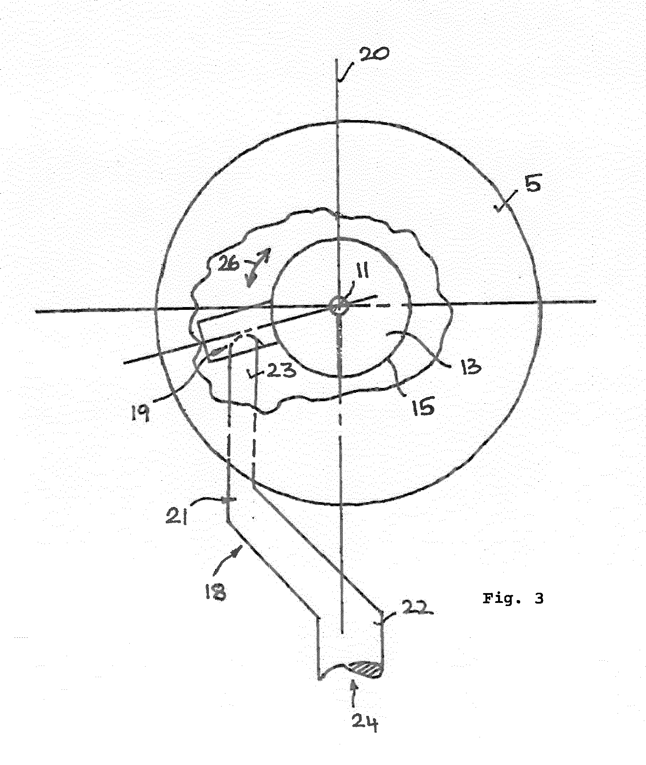

The aforementioned bearing device 8 of base part 7 may include a central bearing block 15 projecting from a bottom side of the base part 7 towards the tool carrier 5, wherein such bearing block 15 may have a substantially cylindrical shape, cf. Fig. 2 and 3.

To connect the tool carrier 5 to such bearing block 15, a pivot pin 16 may be provided which may be slidably received within a supporting recess 17 formed in the tool carrier 5 and shaped, e.g., as a dead end bore. In addition or alternatively, the pivot pin 16 may also be received within a respective support recess formed in the bearing block 15. In addition or alternatively, the pivot pin 16 may be formed integrally with or attached fixedly to either one of the tool carrier 5 and the bearing block 15 as long as the other one of said two elements is rotatable and slidable relative to such pin 16 so as to allow rotation of the tool carrier 5 about the axis defined by the pivot pin 16 and axial movement therealong. The pivot pin 16 may extend substantially perpendicular to the plane defined by the tool carrier 5 and/or substantially through the center of the bearing block 15 and/or the center of the tool carrier 5.

The top surface of the bearing block 15 and the back surface of the tool carrier 5, as shown by Fig. 2, may form cam surfaces 13 and 14 substantially corresponding to each other and/or in form-fitting engagement with each other. Such cam surfaces 13 and 14 may define a sloped, screw-type support surface extending along an arc around the axis of movement 11 defined by pivot pin 16. The cam surfaces 13 and 14 may extend, as shown by Fig. 3, over 360° around the axis of movement 11 which extends perpendicular to the drawing plane of Fig. 3. Such cam surfaces 13 and 14 may be comprised of cam surface sections which together extend around 360°, e.g. a pair of 180° cam surface sectors.

As shown by Fig. 2, a pitch 28 of the cam surface 13 and 14 may define the amount of axial movement of the tool carrier 5 which may be caused when the tool carrier 5 is rotated about the axis of movement 11.

The bearing block 15 and, thus, the cam surface 13, 14 may be substantially positioned below the center of the tool carrier 5, wherein the diameter of the bearing block 15 may range from about 20% to about 50% of the diameter of the tool carrier 5, thus providing for a substantially stabile support of the tool carrier 5 substantially prevented from tilting thereby.

So as to cause rotation of the tool carrier 5, a drive rod 24 may extend through the tubular connecting piece 3 and may connect the motor in the handpiece 2 to the tool carrier 5. Such drive rod 24 may be caused by the motor to axially reciprocate or oscillate along the longitudinal axis of the drive rod 24 which may be parallel or coaxial to the longitudinal axis 20 of the tubular connecting piece 3. As can be seen from Fig. 3, the end portion of drive rod 24 or - so as to allow easy exchange of the tool head 4 - a separate drive shaft element 18 to be connected with drive rod 24 may have a cranked or bent configuration so that the end portion of the drive shaft element 18 may be laterally offset from the longitudinal axis 20 to be connected to a connecting joint 19 which may be radially offset from the axis of movement 11. The bent or cranked connecting portion 21 of the drive shaft element 18 may extend from a shaft portion 22 which is coaxial to the longitudinal axis 20 to a joint end portion 23 that can be connected to the connecting joint 19 provided at the tool carrier 5 and offset laterally to said longitudinal axis 20. In a middle position between the end points of the axial oscillation of the drive shaft element 18, the said connection joint 19 may be arranged in an area neighboring a plane perpendicular to the longitudinal axis 20, wherein said connecting joint 20 may lie on such plane perpendicular to the longitudinal axis 20 when the driving shaft element 18 is in the aforementioned middle position between the end points of the axial oscillation. As can be seen from Fig. 3, the connecting joint 19 may be radially outwards of the bearing block 15, but radially inwards of the outer periphery of the tool carrier 5, wherein such connecting joint 19 may be positioned at a back side 29 or underside of the tool carrier 5 and, thus, within the interior defined between the tool carrier 5 and base part 7.

As shown by Figures 2 and 3, when the drive shaft element 18 reciprocates axially along longitudinal axis 20, tool carrier 5 may rotationally oscillate about the axis of movement 11 as indicated by arrow 26. The cam surfaces 13 and 14 may transform such rotation of the tool carrier 5 into an axial oscillating movement of the tool carrier 5, thereby creating a multiaxial oscillation of tool carrier 5 including rotational oscillation and axial oscillation about/along axis of movement 11.

To allow for such axial oscillation along the axis of movement 11, the connecting joint 19 connecting the drive shaft element 18 to the tool carrier 5 may provide for axial freedom of the drive shaft element 18 relative to tool carrier 5 in a direction parallel to the axis of movement, wherein e.g. an elongate recess may be provided in tool carrier 5 to receive a connecting joint pin extending substantially parallel to axis of movement 11 so as to allow the tool carrier 5 to move away from and move closer to the joint end portion 23 of drive shaft element 18 in the direction of the axis of movement 11. In an alternative or in addition, the drive rod 24 may be supported to allow for rotation of the drive rod 24 and/or the drive shaft element 18 about longitudinal axis 20 so as to give the joint end portion 23 of drive shaft element 18 the freedom to follow the up and down movement of the tool carrier 5.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A tool head (4) for an electric toothbrush (1), comprising at least one tool carrier (5) movably supported on a base part (7) by means of a bearing device (8), said bearing device including rotational support means (9) for rotatably supporting said tool carrier (5) about an axis of movement (11) and axial support means (10) for axially movably supporting said tool carrier (5) along said axis of movement (11), and drive means (12) for driving said tool carrier (5) in an oscillating manner to rotationally oscillate about said axis of movement (11) and to axially oscillate along said axis of movement (11), wherein said drive means (12) include a cam surface (13, 14) for transforming a rotation of said tool carrier (5) into axial movement of said tool carrier (5) relative to said base part (7) along said axis of movement (11).

2. A tool head (4) according to claim 1, wherein said cam surface (13, 14) includes a sloped support surface extending along an arc around said axis of movement (11) and being sloped relative to a plane perpendicular to said axis of movement (11).

3. A tool head (4) according to anyone of the preceding claims, wherein said cam surface (13, 14) forms a screw-type support surface winding around said axis of movement (11) forming the center of said support surface.

4. A tool head (4) according to the preceding claim, wherein said sloped support surface has a constant pitch (28) and/or is substantially planar when viewed in a cross-sectional plane containing the axis of movement (11).

5. A tool head (4) according to anyone of the preceding claims, wherein said cam surface (13, 14) is concave with the axis of movement (11) being the center of concavity and/or is, when viewed in a cross-sectional plane containing the axis of movement (11), sloped towards the axis of movement (11), thereby forming a centering contour for centering the tool carrier (5) to the axis of movement (11) when rotating the tool carrier (5) about said axis of movement (11).

6. A tool head (4) according to anyone of the preceding claims, wherein said cam surface (13) is formed by the top surface of a central bearing block facing the back side (29) of the tool carrier (5) and surrounding the axis of movement (11).

7. A tool head (4) according to the preceding claim, wherein said tool carrier (5) is rotatably and axially movable connected to said central bearing block (15) by means of a pivot pin (16) extending coaxially to said axis of movement (11) substantially through the center of said bearing block (15) and/or said tool carrier (5), said pivot pin (16) being slidably received in a support recess (17) formed in said bearing block (15) and/or in said tool carrier (5).

8. A tool head (4) according to anyone of the preceding claims, wherein both the tool carrier (5) and the base part (7) are provided with such cam surface (13, 14), wherein the tool carrier's cam surface (14) is substantially corresponding in shape to the base part's cam surface (13), wherein said cam surfaces (13, 14) are in sliding engagement with each other.

9. A tool head (4) according to anyone of the preceding claims, wherein said drive means (12) include a drive shaft element (18) connectable to said tool carrier (5) at a connecting joint (19) spaced apart from the axis of movement (11), said drive shaft element (18) being adapted to reciprocate along a longitudinal axis (20) substantially transverse to said axis of movement (11) of the tool carrier (5).

10. A tool head (4) according to the preceding claim, wherein said drive shaft element (18) comprises a bent and/or cranked connecting portion (21) extending from a shaft portion (22) which is coaxial to said longitudinal axis (20), to a joint end portion (23) which is connectable to said connecting joint (19) and offset laterally to said longitudinal axis (20).

11. A tool head (4) according to claim 9 or 10, wherein the connecting joint (19) is associated with a portion of the tool carrier (5) which is, when said tool carrier (5) is in a middle position of its rotational oscillation, positioned in a plane substantially perpendicular to the longitudinal axis (20) and/or within a sector of about +/-15° relative to an axis perpendicular to said longitudinal axis (20).

12. A tool head (4) according to anyone of the preceding claims, wherein the bearing device (8) including the cam surface (13, 14) is arranged radially inwards of the connecting joint (19) where the tool carrier (5) is connected to the drive shaft element (18).

13. Toothbrush comprising a tool head (4) according to anyone of the preceding claims, and a handpiece (2) connected to said tool head (4) through a tubular connecting piece (3).

14. Toothbrush according to claim 13, further comprising a drive rod adapted to axially reciprocate along its longitudinal axis substantially parallel to the longitudinal axis (20) of the toothbrush.
